Europäisches Patentamt

European Patent Office

Office européen des brevets

(11) Veröffentlichungsnummer: **0 359 936**
**A1**

(12) # EUROPÄISCHE PATENTANMELDUNG

(21) Anmeldenummer: 89113300.1

(22) Anmeldetag: 20.07.89

(51) Int. Cl.⁵: **F16B 2/22 , A45D 20/00**

(30) Priorität: 26.08.88 DE 8810826 U

(43) Veröffentlichungstag der Anmeldung:
28.03.90 Patentblatt 90/13

(84) Benannte Vertragsstaaten:
AT BE CH DE ES FR GB GR IT LI LU NL SE

(71) Anmelder: Wella Aktiengesellschaft
Berliner Allee 65
D-6100 Darmstadt(DE)

(72) Erfinder: Trinkaus, Karl
Hoffmannstrasse 38
D-6100 Darmstadt(DE)

(54) Einteilige Kunststoffklammer.

(57) Bei einer einteiligen Kunststoffklammer 1, bestehend aus zwei Klemmschenkeln 2, 3 an einem Ende
und zwei Spreizgriffen 4, 5 am anderen Ende, einem
Drehlager 7 und einer Druckspannfeder 6, ist erfindungsgemäß vorgesehen, daß die beiden Enden der
Spreizgriffe 4, 5 mit der Druckspannfeder 6 verbunden sind, und daß ein zusammenschnappbares
Drehlager 7 angeordnet ist, wodurch eine extrem
kostengünstige Kunststoffklammer realisierbar ist.

Fig. 7

Xerox Copy Centre

EP 0 359 936 A1

## Einteilige Kunststoffklammer

Die Erfindung betrifft eine einteilige Kunststoffklammer, bestehend aus zwei Klemmschenkeln an einem Ende und zwei Spreizgriffen am anderen Ende, einem Drehlager und einer Druckspannfeder.

Eine derartige Klammer ist aus der DE-77 29 057-U1 bekannt. Diese Schrift offenbart eine Klammer mit einer Druckspannfeder, die im wesentlichen V-förmig ausgestaltet ist und mittels Filmscharnieren im Bereich der Spreizgriffe innenseitig verbunden ist. Durch diese Ausgestaltung ergibt sich eine nicht befriedigende Federwirkung. Als Drehlager wird eine Filmscharnierverbindung vorgeschlagen, die jedoch den Nachteil hat, daß ein solches Lager sehr leicht zerstört werden kann. Außerdem ist eine solche Klammer herstellungstechnisch sehr aufwendig und teuer.

Der Erfindung liegt daher die Aufgabe zugrunde, eine gattungsgleiche Klammer zu schaffen, die die oben genannten Nachteile nicht aufweist. Insbesondere soll auch eine große Variationsmöglichkeit der Federeigenschaft vorgegeben werden können.

Gelöst wird diese Aufgabe gemäß dem kennzeichnenden Teil des Anspruchs 1. Weitere vorteilhafte Ausgestaltungen der Erfindung gehen aus den Unteransprüchen hervor.

Bei der erfindungsgemäßen Kunststoffklammer sind die beiden Enden der Spreizgriffe mit der Druckspannfeder verbunden, außerdem ist ein zusammenschnappbares Drehlager vorgesehen, wodurch ein verhältnismäßig einfaches Werkzeug zum Herstelen des Erfindungsgegenstandes erforderlich ist. Eine gute Federeigenschaft läßt sich durch eine U-förmige Ausgestaltung erreichen, wobei zweckmäßigerweise die Feder innenseitig der Spreizgriffe angeordnet ist. Je nach Materialeigenschaft und Dimensionierung der Feder (Stärke, Breite, Länge, Einschnürungen), läßt sich die Federeigenschaft vorausbestimmen.

In einer Weiterbildung der Erfindung ist ein Schenkel der Klammer mit einem Wärmesensor versehen, wodurch der Wärmesensor an ein zu messendes Objekt angeklemmt werden kann, z. B. als Temperaturmeßklammer für einen Referenzlokkenwickler in Form einer auf einen Lockenwickler aufgewickelten Haarsträhne bei einer temperaturgesteuerten Dauerwellbehandlung.

In einer anderen Weiterbildung der Erfindung ist in einem Schenkel ein Reed-Kontakt und in dem anderen Schenkel ein Permanentmagnet derart angeordnet, daß bei sich berührenden Schenkeln der Reed-Kontakt durch den Permanentmagneten durchgeschaltet ist. Dadurch kann vorteilhafterweise eine sich unbeabsichtigt von einem Objekt gelöste Klammer überwacht werden, z. B. bei oben genannter Dauerwellbehandlung. Eine solche Vorrichtung zur Durchführung einer wärmegesteuerten Dauerwellbehandlung ist z. B. aus der EP-0 072 994-B2 bekannt.

Je nach Ausgestaltung der Schenkel kann die Klammer für spezielle Aufgaben eingesetzt werden, z. B. als Haar- oder Wäscheklammer. Für oben genannte Klammer mit einem Wärmesensor ist eine klauenartige Ausgestaltung der Schenkel vorteilhaft, damit diese gut einen Lockenwickler umgreifen können.

Die Erfindung wird im folgenden anhand von drei Ausführungsbeispielen näher erläutert.

Es zeigt:

Fig 1 bis 6 ein erstes Ausführungsbeispiel einer Klammer;

Fig. 7 und 8 ein zweites Ausführungsbeispiel;

Fig. 9 ein drittes Ausführungsbeispiel.

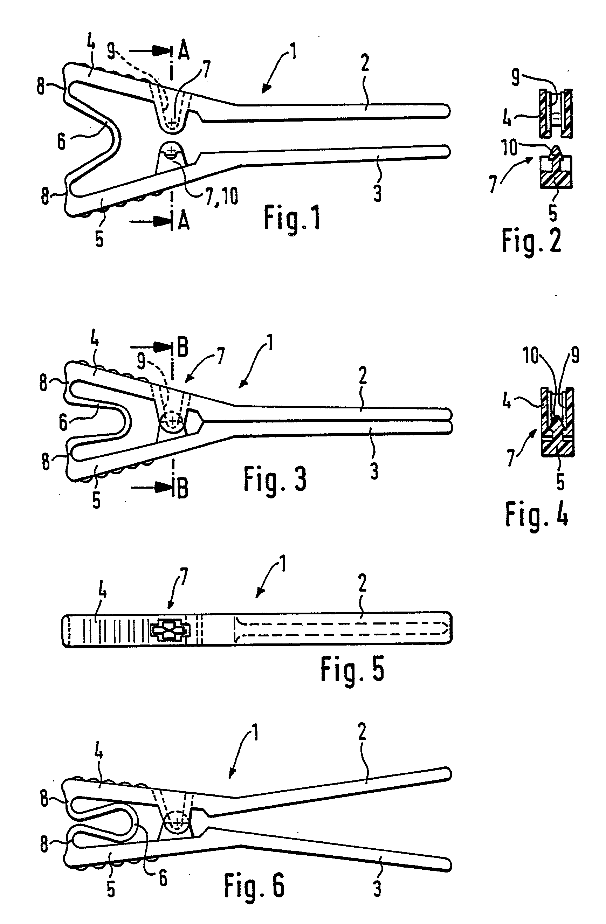

In der Fig. 1 ist in einer Seitenansicht die erfindungsgemäße einteilige Kunststoffklammer 1 dargestellt. Diese besteht aus zwei Klemmschenkeln 2, 3, woran sich Spreizgriffe 4, 5 anschließen. Die Enden der Spreizgriffe 4, 5 sind mit einer Druckspannfeder 6 verbunden, die im wesentlichen U-förmig ausgestaltet und innenseitig der Spreizgriffe angeordnet ist. Im Bereich zwischen den Klemmschenkeln 2, 3 und den Spreizgriffen 4, 5 ist ein zusammenschnappbares Drehlager 7. In dieser Fig. ist das Drehlager 7 noch nicht zusammengeschnappt, sondern in etwa so, wie die Kunststoffklammer 1 aus dem Werkzeug fällt. Ein billigeres bzw. einfacheres Werkzeug könnte dadurch realisiert werden, daß die Kunststoffklammer 1 mit ihren Klemmschenkeln 2, 3 um ca. 90 Grad voneinander orientiert sind, gegebenenfalls auch um 180 Grad. Dann müßte jedoch eventuell im Rahmen des fachmännischen Könnens die Verbindung der Druckspannfeder 6 mit den Spreizgriffen 4, 5 modifiziert werden. Die Feder 6 weist im Bereich ihrer Verbindung mit den Spreizgriffen 4, 5 eine Materialverdünnung 8 auf, womit eine bessere Federkennlinie erzielt wird.

In der Fig. 2 ist in einer Schnittdarstellung gemäß dem Schnitt A-A nach der Fig. 1 das Drehlager 7 dargestellt. Die obere Hälfte des Drehlagers 7 ist mit einer Hinterschneidung 9 versehen, wodurch ein Rastvorsprung 10 mit der Hinterschneidung 9 drehbar verrasten kann und dann das Drehlager 7 bildet.

Eine gebrauchsfertige Klammer 1 mit zusammengeschnapptem Drehlager 7 ist in der Fig 3 dargestellt. In dieser Position steht die Feder 6 unter Spannung und drückt über das Drehlager 7 die beiden Klemmschenkel 2, 3 zusammen. Ein automatisiertes Zusammenschnappen des Drehlagers 7 ist dadurch sehr einfach zu bewerkstelligen, da die beiden Lagerhälften durch die Federverbindung zentrisch geführt werden.

Fig. 4 zeigt in einer Schnittdarstellung das eingeschnappte Drehlager 7 gemäß dem Schnitt B-B nach der Fig. 3. Dabei ist die Drehlagerverbindung so bemessen, daß nur ein kleines Spiel zwischen dem Rastvorsprung 10 und der Hinterschneidung 9 vorhanden ist.

Eine Draufsicht auf die Kunststoffklammer 1 zeigt die Fig. 5. Je nach Notwendigkeit können die Klemmschenkel 2, 3 ausgestaltet werden, z. B. als Haarklammer, wie gestrichelt angedeutet.

Eine per Hand aufgespreizte Klammer 1 ist in der Fig. 6 dargestellt und veranschaulicht in dieser Position die gespannte Feder 6.

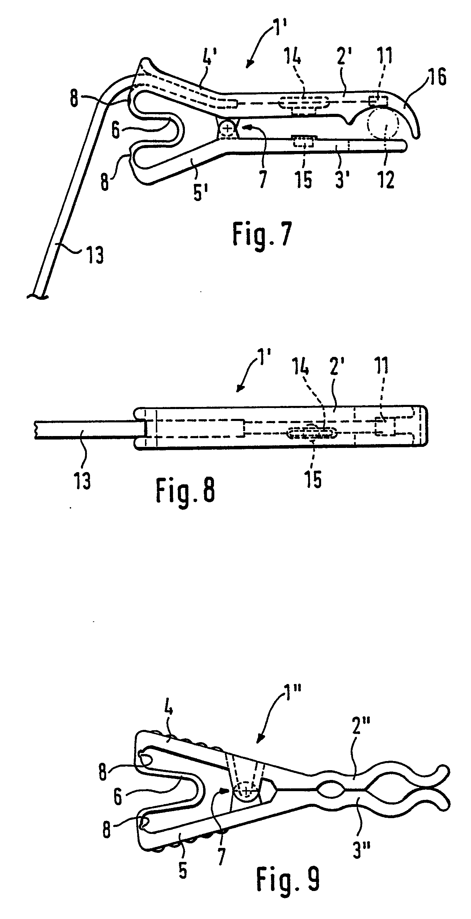

Fig. 7 zeigt in einer Seitenansicht eine Klammer 1′ mit einem Temperatursensor 11, der in einem Schenkel 2′ angeordnet ist und beispielsweise dazu dient, eine Haartemperatur einer auf einem Lockenwickler 12 aufgewickelten Haarsträhne zu messen. Zur Übertragung des elektrischen Temperaturwertes vom Sensor 11 dient eine elektrische Leitung. Für eine Überwachung auf den ordnungsgemäßen Sitz des Temperatursensors mit dem Lockenwickler 12 ist in dem einen Schenkel 2′ ein Reed-Kontakt 14 angeordnet, in dem anderen Schenkel 3′ ist ein Permanentmagnet 15 angeordnet. Sollte sich die Klammer 1′ unbeabsichtigt von dem Lockenwickler 12 lösen, wird durch die Annäherung des Permanentmagneten 15 an den Reed-Kontakt 14 dieser aktiviert, wodurch über die Leitung 13 ein Alarmsignal entnommen werden kann. Für einen guten Sitz der Kunststoffklammer 1′ mit dem Lockenwickler 12 ist ein Schenkel 2′ im Endbereich mit einer klauenartigen Ausgestaltung 16 versehen.

Zur besseren Anschauung ist in der Fig. 8 die Klammer 1′ in einer Draufsicht dargestellt.

Ein drittes Ausführungsbeispiel ist in der Fig. 9 in Form einer Wäscheklammer 1″ dargestellt, die dazu mit speziell geformten Schenkeln 2″, 3″ versehen ist.

Für die Herstellung der Klammer 1, 1′, 1″ hat sich Polyoxymethylen bestens bewährt, da es neben guten Gleiteigenschaften für das Lager 7 auch eine gute Federeigenschaft für die Feder 6 aufweist.

## Ansprüche

1. Einteilige Kunststoffklammer (1, 1′, 1″), bestehend aus zwei Klemmschenkeln (2, 2′, 2″; 3, 3′, 3″) an einem Ende und zwei Spreizgriffen (4, 4′; 5, 5′) am anderen Ende, einem Drehlager (7) und einer Druckspannfeder (6), **dadurch gekennzeichnet,** daß die beiden Enden der Spreizgriffe (4, 4′; 5, 5′) mit der Druckspannfeder (6) verbunden sind, und daß ein zusammenschnappbares Drehlager (7) angeordnet ist.

2. Klammer nach Anspruch 1, **dadurch gekennzeichnet,** daß die Feder (6) U-förmig ausgestaltet ist.

3. Klammer nach Anspruch 2, **dadurch gekennzeichnet,** daß die Feder (6) innenseitig der Spreizgriffe (4, 4′; 5, 5′) angeordnet ist.

4. Klammer nach Anspruch 1 oder/und Anspruch 2 oder/und Anspruch 3, **dadurch gekennzeichnet,** daß ein Schenkel (2′) der Klammer (1′) mit einem Temperatursensor (11) versehen ist.

5. Klammer nach mindestens einem der vorangegangenen Ansprüche, **dadurch gekennzeichnet,** daß in dem einen Schenkel (2′) ein Reed-Kontakt (14) und in dem anderen Schenkel (3′) ein Permanentmagnet (15) angeordnet ist.

6. Klammer nach Anspruch 5, **dadurch gekennzeichnet,** daß mindestens ein Schenkel (2′) im Endbereich eine klauenartige Ausgestaltung (16) aufweist.

7. Klammer nach mindestens einem der Ansprüche 1 bis 3, **dadurch gekennzeichnet,** daß die Klammer (1) als eine Haarklammer (1) ausgebildet ist.

8. Klammer nach mindestens einem der Ansprüche 1 bis 3, **dadurch gekennzeichnet,** daß die Klammer (1) als eine Wäscheklammer (1″) ausgebildet ist.

9. Klammer nach mindestens einem der vorangegangenen Ansprüche, **dadurch gekennzeichnet,** daß die Klammer (1, 1′, 1″) aus Polyoxymethylen besteht.

Fig. 1

Fig. 2

Fig. 3

Fig. 4

Fig. 5

Fig. 6

Fig. 7

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| X | DE-A-3 246 667 (HIRSEMANN) \* Seite 15, Absatz 2; Figuren 20-22 \* | 1-3,7-9 | F 16 B 2/22 A 45 D 20/00 |
| A | --- | 6 | |
| A | CH-A- 372 433 (G. LONGHINI) \* Seite 1, Zeile 47 - Seite 2, Zeile 39; Figuren 1-3 \* --- | 7,9 | |
| D,A | EP-A-0 072 994 (HOLLMANN) \* Seite 5, Zeile 14 - Seite 6, Zeile 14; Figuren 5,9 \* --- | 4 | |
| D,A | DE-U-7 729 057 (WELLA) ----- | | |

|  |
| --- |
| **RECHERCHIERTE SACHGEBIETE (Int. Cl.5)** |
| F 16 B A 45 D |

Der vorliegende Recherchenbericht wurde für alle Patentansprüche erstellt

| Recherchenort | Abschlußdatum der Recherche | Prüfer |
| --- | --- | --- |
| DEN HAAG | 06-12-1989 | ARESO Y SALINAS J. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument